(19) Europäisches Patentamt
European Patent Office
Office européen des brevets

(11) **EP 4 712 478 A1**

(12) **EUROPEAN PATENT APPLICATION**

(43) Date of publication:
**18.03.2026 Bulletin 2026/12**

(21) Application number: **24200902.5**

(22) Date of filing: **17.09.2024**

(51) International Patent Classification (IPC):
**H04N 19/436** $^{(2014.01)}$    **H04N 19/63** $^{(2014.01)}$
**H04N 19/645** $^{(2014.01)}$

(52) Cooperative Patent Classification (CPC):
**H04N 19/63; H04N 19/436; H04N 19/645**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(71) Applicant: **intoPIX s.a.**<br>**1435 Mont-Saint-Guibert (BE)** | (72) Inventors:<br>• **DAMMAN GEEROMS, Corentin Aurélien Sébastien**<br>**1950 Kraainem (BE)**<br>• **DE CONINCK, Adrien**<br>**1495 MARBAIS (BE)**<br>• **BUYSSCHAERT, Charles Daniel Nicole André Sylvestre**<br>**1170 Bruxelles (BE)**<br><br>(74) Representative: **Gevers Patents**<br>**De Kleetlaan 7A**<br>**1831 Diegem (BE)** |

(54) **METHOD AND APPARATUS FOR PARALLEL DECODING OF DIGITAL DATA**

(57)    The invention relates to a method for decoding an encoded image obtainable by applying at least one wavelet-type filter operation in a vertical direction, wherein the efficiency of the decoding is improved by reducing dependencies between respective processing channels decoding in parallel respective strips of spatial image samples, wherein each processing channel reconstructs a strip of spatial image samples independently from the other processing channels from an extended group of wavelet coefficients, whereby extended groups of wavelet coefficients mutually overlap to an extent that each extended group of wavelet coefficients comprises all the wavelet coefficients required for the processing channel receiving the extended group of wavelet coefficients to independently reconstruct a strip of spatial image samples. The invention also relates to an apparatus and a computer program for performing the method for decoding of the invention.

FIG. 6

# Description

## Field of the invention

The present invention relates to a method, apparatus, and computer program for parallel decoding of an encoded image obtainable by applying at least one decorrelative transform running over a plurality of image lines, whereby the parallel decoding is performed using a plurality of processing channels.

## Background of the invention

An image processing algorithm such as an encoding of an image, or a decoding of an encoded image may apply a decorrelative transform running over a plurality of image lines. A decorrelative transform allows the entropy of a set of coefficients or image samples to be reduced by concentrating probabilities of occurrence on a subset of coefficient values. A decorrelative transform may be for example a colour transform, such as a reversible colour transform (RCT), a temporal decorrelative transform based on interframe predictions, a discrete cosine transform (DCT), or a discrete wavelet transform (DWT).

There is a need for a more efficient, or faster, implementation of such an image processing algorithm, for example for processing large images with a smaller amount of resources or in a shorter amount of time or for processing a sequence of images with a higher frame rate. A known technique to implement such an image processing algorithm in a more efficient way is to rely on parallel computing, i.e. distribute computation tasks, or "jobs", among a plurality of "processing channels", or "workers", such that said processing channels work in parallel to encode or decode an image. However, it may be challenging to design a parallel implementation of an image processing algorithm comprising a decorrelative transform running over an entire image, in particular because of dependencies between processing channels working in parallel.

Computing the same data several times is generally thought to decrease the overall performance of a system comprising a plurality of processing channels working together in parallel to perform some computational task such as an encoding or a decoding of an image. Therefore, a known solution for a more efficient parallel implementation of an image processing algorithm is to distribute computation tasks among a plurality of processing channels in such a way as to minimize the so-called "overhead", i.e. data that is computed more than once.

However, distributing computation tasks among a plurality of processing channels generally requires to synchronize said channels and thus introduces dependencies between said channels, for instance so-called "synchronization points", i.e. time points where several processing channels need to wait for each other until all of them have completed their respective computations. In turn, said synchronization points, or more generally said dependencies between processing channels, may decrease the overall performance of a system comprising said plurality of processing channels. Indeed, when a processing channel is waiting, it is idle and therefore does not process data, which may lead to a loss of performance.

Moreover, a plurality of processing channels may be implemented as a plurality of processing units, each one of said units having its own memory, called a "cache memory" or simply a "cache". In such a case, said dependencies between processing channels may lead to what is known as a "data cache miss", or simply a "cache miss", which may also decrease the overall performance of a system comprising said plurality of processing channels.

Therefore, there is a need for a more efficient implementation of a decoding of an encoded image obtainable by applying at least one decorrelative transform running over a plurality of image lines.

## Summary of the invention

In view of the abovementioned deficiencies of the prior art, it is an object of the present invention to provide a method, apparatus, and computer program for a more efficient parallel decoding of an encoded image obtainable by applying at least one decorrelative transform running over a plurality of image lines, whereby the parallel decoding is performed using a plurality of processing channels.

According to a first aspect of the invention, there is provided a method for decoding an encoded image, wherein the encoded image is obtainable by the steps of:

- applying a wavelet-type transformation to a rectangular array of spatial image samples representing the image, the wavelet-type transformation comprising applying a cascade of wavelet-type filter operations at least one of which is applied in a vertical direction, the wavelet-type transformation producing wavelet coefficients that are spatially related to the spatial image samples in the rectangular array;
- organizing the wavelet coefficients to obtain respective groups of wavelet coefficients that are spatially related to respective slices of the rectangular array of spatial image samples; and
- entropy encoding the respective groups of wavelet coefficients independently from each other;

wherein the method for decoding comprises:

- providing respective processing channels that reconstruct from the wavelet coefficients respective strips of spatial image samples, each of the respective processing channels reconstructing a strip of spatial image samples independently from the other processing channels, the respective strips of spatial image samples corresponding at least in size to the respective slices of the rectangular array of spatial image samples, each of the respective processing channels applying a cascade of inverse wavelet-type filter operations independently from the other processing channels for reconstructing a strip of spatial image samples; and

- supplying respective extended groups of wavelet coefficients to the respective processing channels, whereby the extended groups of wavelet coefficients mutually overlap to an extent that each extended group of wavelet coefficients comprises all the wavelet coefficients required for the processing channel receiving the extended group of wavelet coefficients to independently reconstruct a strip of spatial image samples.

Preferably, the encoded image has been produced by said steps.

The method for decoding of the invention allows an image obtainable by applying at least one wavelet-type filter operation in a vertical direction to be decoded in a more efficient manner.

The method for decoding of the invention allows each processing channel to reconstruct a strip of spatial image samples independently of other processing channels, which may reduce or even remove the need for synchronisation points between processing channels and, more generally, may reduce or even remove dependencies between said channels, thus also potentially reducing data cache misses, thereby increasing the performance of the decoding of the encoded image.

In order to allow each processing channel to reconstruct a strip of spatial image samples independently of other processing channels, each one of said channels is supplied with a respective extended group of wavelet coefficients, such an extended group of wavelet coefficients comprising all the wavelet coefficients needed for reconstructing a strip of spatial image samples. Therefore, the extended groups of wavelet coefficients may mutually overlap, which may introduce some overhead, i.e. some computations may be performed more than once in the respective processing channels, which may in turn decrease the performance of the decoding of the encoded image. However, the reduction of dependencies between the respective processing channels enabled by the method for decoding of the invention more than compensates for said decrease of performance due to said overhead, and the net effect of the method for decoding of the invention on the performance of the decoding of the encoded image is therefore positive, i.e. the method for decoding of the invention allows an image obtainable by applying at least one wavelet-type filter operation in a vertical direction to be decoded in a more efficient manner.

The method for decoding of the invention may allow existing coding techniques to be implemented in a more efficient manner. The JPEG XS standard is an example of an existing coding technique which may be implemented in a more efficient manner according to the method for decoding of the invention. The JPEG XS standard, formally known as ISO/IEC 21122, is an interoperable, visually lossless, low-latency, and lightweight image and video coding system. The JPEG XS standard is divided into several parts, each part specifying specific aspects of the standard. JPEG XS Part 1, formally known in its second edition as ISO/IEC 21122-1:2022, normatively defines how a compressed JPEG XS codestream can be transformed into a decoded image in a bit exact manner, a "codestream" being defined in the JPEG XS standard as a compressed image data representation that includes all necessary data to allow a (full or approximate) reconstruction of the sample values of a digital image. Moreover, JPEG XS Part 1 provides some key algorithms enabling an encoder to generate a JPEG XS codestream. Herein the expression "JPEG XS standard" generally designates the JPEG XS specification according to documents published under reference ISO/IEC 21122, including any part of said specification and any edition of said parts.

An "image" as used herein generally designates an array of image samples comprising "rows" or "lines" of image samples, and "columns" of image samples. The "horizontal direction" runs along the lines of an image, and the "vertical direction" runs along the columns of an image, i.e. across the lines of the image. An image may be encoded such as to form an "encoded image". Encoding an image refers to the process of converting an array of image samples into a different format or representation, for instance for an easier storage, transmission, or processing. An encoded image may be decoded such as to form a "decoded image". Decoding an encoded image refers to the process of reconstructing an array of image samples corresponding to the array of image samples of the image before encoding. The JPEG XS standard specifies coding tools for performing image encoding and decoding. An encoded image may be a codestream as defined in the JPEG XS standard.

A two-dimensional image may be represented by a two-dimensional or "rectangular" array of spatial image samples. A "slice" as used herein designates a compact subset of such a rectangular array of spatial image samples, preferably a subset of said array comprising a plurality of adjacent image lines. Different slices may have different sizes, i.e. different slices may contain different numbers of image lines, for instance.

A "strip" of spatial image samples as used herein comprises decoded or reconstructed spatial image samples corresponding to a slice of a rectangular array of spatial image samples. A strip may be spatially offset from the slice to which it corresponds, i.e. a strip may be shifted upwards or downwards by a number of image lines relative to the slice to which it corresponds. Different strips may have different sizes, i.e. different strips may contain different numbers of spatial image samples. In addition, "a strip corresponding at least in size to a slice" means that a strip comprises the same number of spatial image samples as the slice to which it corresponds.

A "wavelet-type filter operation" as used herein is a filtering operation using one or several wavelet filters. A wavelet filter is used in a wavelet transform and may be a low-pass filter or high-pass filter, for instance. Wavelet filters and wavelet transforms are known to a person skilled in the art. An example of a wavelet transform is a Discrete Wavelet Transform (DWT), which is a mathematical transform that decomposes a signal into different frequency components, each with a resolution matched to its scale. A wavelet filter may be applied in a "forward" way, in which case it may be applied on image samples to produce "wavelet coefficients". Such a forward wavelet-type filter operation may also be applied on wavelet coefficients from a previous filter operation in case there are more than one wavelet filter applied. Herein, a "cascade of wavelet-type filter operations" refers to one or several wavelet-type filter operations applied one after the other. Besides, a wavelet filter may also be applied in an "inverse" way, so as to reverse a wavelet-type filter operation applied in a forward way, in which case it may be applied on wavelet coefficients to reconstruct image samples. Such an inverse wavelet-type filter operation may also be applied on wavelet coefficients to reconstruct wavelet coefficients for a subsequent filter operation in case there are more than one inverse wavelet filter applied. Herein, a "cascade of inverse wavelet-type filter operations" refers to one or several inverse wavelet-type filter operations applied one after the other. Finally, a forward wavelet-type filter operation or an inverse wavelet-type filter operation may be applied in a horizontal direction, i.e. along the lines of an image, or in a vertical direction, i.e. along the columns of an image and thus across the lines of the image. Wavelet-type filter operations applied in a horizontal direction and in a vertical direction may be combined in a cascade of wavelet-type filter operations.

In the steps allowing to obtain the encoded image, the wavelet coefficients produced by the wavelet-type transformation are organized in such a way as to obtain respective groups of wavelet coefficients that are spatially related to respective slices of the rectangular array of spatial image samples. This means that each one of said groups of wavelet coefficients corresponds to a slice, and *vice versa.*

In the steps allowing to obtain the encoded image, the respective groups of wavelet coefficients are entropy encoded independently from each other. This means that there is no dependency between adjacent slices for entropy encoding the respective groups of wavelet coefficients. An example of such an entropy encoding is provided in JPEG XS Part 1 (ISO/IEC 21122-1 :2022) as the vertical prediction mode for bitplane count coding, normatively defined in subclause C.6.5 of JPEG XS Part 1.

Advantageously, the invention may be computer-implemented.

Herein, a "processor" generally designates a device able to execute computer instructions, such as for example a (micro)processor for a computer, which is also known as a central processing unit (CPU), or a graphics processing unit (GPU). A register of a processor, also referred to herein as a "processor register", is a high-speed memory built into a processor for quick data access. Modern processors have the ability to execute instructions in parallel, i.e. executing several instructions during the same period of time, as opposed to a sequential execution of instructions, where only one instruction can be executed by a processor at any instant. Herein, a "processing unit" generally designates a part of a processor able to execute instructions in parallel to other processing units of the processor. In the case of a CPU or a GPU, such a processing unit may execute a so-called "thread of execution", or simply a "thread", as known to a person skilled in the art. Finally, a "processing channel" as used herein generally designates a means for executing instructions in parallel to other processing channels. A processing unit as defined hereinabove may therefore be considered as a processing channel in the context of a processor.

The inventors propose several possible embodiments comprising optional features, where some of them can be combined.

In an embodiment of the invention, at least some of the respective strips of spatial image samples are spatially offset from the respective slices of the rectangular array of spatial image samples. In this embodiment, a strip of spatial image samples may be spatially offset relative to the slice to which said strip corresponds such that the extended group of wavelet coefficients enabling a processing channel to reconstruct said strip does not comprise wavelet coefficients from a previous slice, i.e. a slice above the slice to which the strip corresponds. Indeed, it may be computationally expensive to compute wavelet coefficients from said previous slice, because of the entropy encoding applied to said coefficients in the steps allowing to obtain the encoded image, for instance in the case of an entropy encoding such as the vertical prediction mode for bitplane count coding as specified in the JPEG XS standard. Indeed, in this case, the entropy encoding of wavelet coefficients of a slice depends on previous wavelet coefficients in the slice, therefore requiring to decode an entire slice to compute the value of wavelet coefficients at the bottom of the slice.

In an embodiment of the invention, at least some of the extended groups of wavelet coefficients each comprise wavelet coefficients from only two adjacent groups of wavelet coefficients spatially related to two adjacent slices of the rectangular array of spatial image samples, whereby said extended groups of wavelet coefficients each comprise one of the two groups of wavelet coefficients in its entirety and only a portion of the other one of the two groups of wavelet coefficients, the portion being adjacent to the one of the two groups of wavelet coefficients that is entirely comprised in the extended group of wavelet coefficients. An advantage of this embodiment is that wavelet coefficients related to only two slices need to be computed, which may be less computationally expensive than computing wavelet coefficients from more than two slices, especially in a case where the entropy encoding of wavelet coefficients of a slice depends on previous wavelet coefficients in the slice, as described in the previous paragraph in relation with the previous embodiment. This embodiment may be combined with the previous embodiment wherein at least some of the respective strips of spatial image samples are spatially offset from the respective slices of the rectangular array of spatial image samples, in which case the advantages of both embodiments apply to the combined embodiment.

In an embodiment of the invention, the cascade of inverse wavelet-type filter operations comprises at least one inverse wavelet-type filter operation of the LeGall 5/3 type in the vertical direction. A wavelet-type filter operation of the LeGall 5/3 type is a known type of Discrete Wavelet Transform (DWT) comprising a low-pass filter with a support of 5 coefficients and a high-pass filter with a support of 3 coefficients. A wavelet-type filter operation of the LeGall 5/3 type is also herein referred to as a "DWT 5/3 transform". The DWT 5/3 transform is used as a decorrelative transform in the JPEG XS standard, see e.g. subclause E.7 of JPEG XS Part 1 (ISO/IEC 21122-1 :2022). Compared to other wavelet transforms, such as for example the DWT 9/7 transform used in JPEG 2000 (formally known as ISO/IEC 15444), the DWT 5/3 transform offers the following advantages. First, it is reversible because it uses only integer coefficients, so its output does not require rounding (quantization) and so it does not introduce any quantization noise. In addition, the low-pass and high-pass filters of the DWT 5/3 transform have a reduced support of only 5 and 3 coefficients, respectively. Finally, the DWT 5/3 transform may be implemented "in-place" through the so-called "lifting scheme" technique, thereby allowing it to be implemented with a reduced computational complexity and a reduced memory footprint.

In an embodiment of the invention, the decoding of the encoded image conforms with a JPEG XS standard.

In an embodiment of the invention, the method for decoding of the invention is further characterized in that:

- at least some of the respective strips of spatial image samples are spatially offset by one precinct from the respective slices of the rectangular array of spatial image samples; and
- at least some of the extended groups of wavelet coefficients each comprise:
- an entire group of wavelet coefficients spatially related to a slice of the rectangular array of spatial image samples; and

- at least two precincts from an adjacent group of wavelet coefficients spatially related to an adjacent slice of the rectangular array of spatial image samples, the at least two precincts being adjacent to the entire group of wavelet coefficients comprised in the extended group of wavelet coefficients.

Herein, the term "precinct" is to be interpreted according to the JPEG XS standard, i.e. as a collection of wavelet coefficients contributing to a given spatial region of an image, wherein said wavelet coefficients may be optionally quantized. In addition, in an embodiment where the decoding of the encoded image conforms with the JPEG XS standard, a slice may be interpreted according to the JPEG XS standard, i.e. as an integral number of precincts whose wavelet coefficients can be entropy-decoded independently. However, a slice as defined herein may generally comprise a plurality of slices according to the JPEG XS standard.

In an embodiment of the invention, the method for decoding of the invention is further characterized in that:

- the cascade of inverse wavelet-type filter operations comprises one inverse wavelet-type filter operation of the LeGall 5/3 type in the vertical direction; and
- at least some of the extended groups of wavelet coefficients each comprise:

- an entire group of wavelet coefficients spatially related to a slice of the rectangular array of spatial image samples; and
- two precincts from an adjacent group of wavelet coefficients spatially related to an adjacent slice of the rectangular array of spatial image samples, the two precincts being adjacent to the entire group of wavelet coefficients comprised in the extended group of wavelet coefficients.

In an embodiment of the invention, the method for decoding of the invention is further characterized in that:

- the cascade of inverse wavelet-type filter operations comprises two inverse wavelet-type filter operations of the LeGall 5/3 type in the vertical direction; and
- at least some of the extended groups of wavelet coefficients each comprise:

- an entire group of wavelet coefficients spatially related to a slice of the rectangular array of spatial image samples; and
- two precincts from an adjacent group of wavelet coefficients spatially related to an adjacent slice of the rectangular array of spatial image samples, the two precincts being adjacent to the entire group of wavelet coefficients comprised in the extended group of wavelet coefficients.

According to a second aspect of the invention, there is provided a computer program comprising instructions which, when the program is executed by a computer, cause the computer to carry out the method for decoding of the invention.

According to a third aspect of the invention, there is provided a decoder comprising a processor and a memory, and configured to perform the method for decoding of the invention.

A decoder according to the third aspect of the invention may be a data processing device comprising the following means for carrying out the method for decoding of the invention: a processor able to execute computer instructions, such as for example a CPU, or a GPU, or another type of processor; and at least one memory, such as for example a non-transitory computer-readable memory, a processor register, a random-access memory (RAM), a non-volatile memory, or another type of memory.

All the possible embodiments and advantages of the first aspect of the invention apply *mutatis mutandis* to other aspects of the invention.

## Brief description of the figures

For a better understanding of the present invention, reference will now be made, by way of example, to the accompanying drawings in which:

- Fig. 1 schematically represents an encoder for encoding an image;
- Fig. 2 schematically represents a decoder for decoding an encoded image;
- Fig. 3 is a schematic representation of a lifting scheme implementation of a wavelet-type filter operation of the LeGall 5/3 type in a forward way;
- Fig. 4 is a schematic representation of a lifting scheme implementation of a wavelet-type filter operation of the LeGall 5/3 type in an inverse way;
- Fig. 5 illustrates a decoding of an encoded image according to the prior art, i.e. in several stages;
- Fig. 6 illustrates a decoding of an encoded image according to the invention, i.e. in a single stage.

The figures are not drawn to scale. Generally, identical or analogous elements are denoted by the same reference numerals or letters in the figures.

## Detailed description of some embodiments of the invention

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn to scale for illustrative purposes.

Use of the verb "to comprise", as well as the respective variants and conjugations, does not exclude the presence of elements other than those stated. Use of the article "a", "an" or "the" preceding an element does not exclude the presence of a plurality of such elements.

The terms "first", "second", "third" and the like, in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, embodiments referred to as "preferred" are to be construed as exemplary manners in which the invention may be implemented rather than as limiting the scope of the invention.

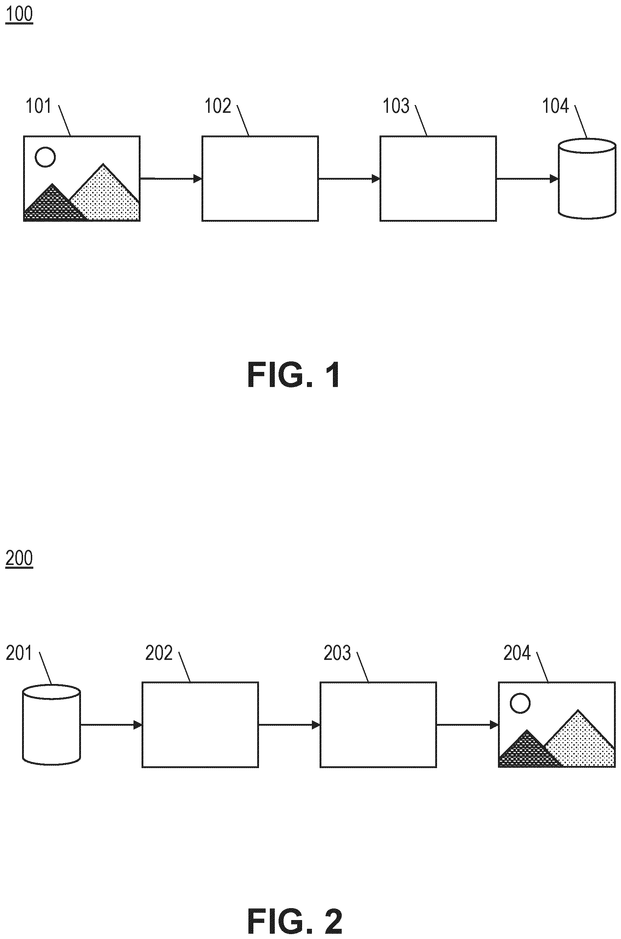

Fig. 1 schematically represents an encoder 100 for encoding an image 101. Fig. 1 provides a block diagram of the encoder 100. The encoder 100 may be configured for performing the steps allowing to obtain an encoded image according to the invention. The encoder 100 comprises a decorrelative transform module 102 and an entropy coding module 103. The encoder 100 operates as follows. The encoder 100 receives an image 101 and applies at least one decorrelative transform on image samples from said image 101 in order to reduce the correlation of said image samples. Such a decorrelative transform may be for instance a reversible colour transform (RCT), a temporal decorrelative transform based on interframe predictions, a discrete cosine transform (DCT), or a discrete wavelet transform (DWT). The entropy coding module 103 then receives decorrelated image samples from the decorrelative transform module 102 and performs rate allocation and entropy coding of said decorrelated image samples. Finally, the entropy coding module 103 packs the entropy-coded samples so as to produce an encoded image 104.

Fig. 2 schematically represents a decoder 200 for decoding an encoded image 201. Fig. 2 provides a block diagram of the decoder 200. The decoder 200 may be configured for performing the method for decoding of the invention. The decoder 200 comprises an entropy decoding module 202 and an inverse decorrelative transform module 203. The decoder 200 operates as follows. The decoder 200 receives an encoded image 201 and performs entropy decoding of said encoded image 201. The inverse decorrelative transform module 203 then receives entropy decoded coefficients from the entropy decoding module 202 and applies at least one inverse decorrelative transform on said entropy decoded coefficients for reconstructing a decoded image 204. The encoded image 201 of Fig. 2 may correspond to the encoded image 104 of Fig. 1. The decoded image 204 may correspond to the image 101 of Fig. 1 after an encoding and a decoding.

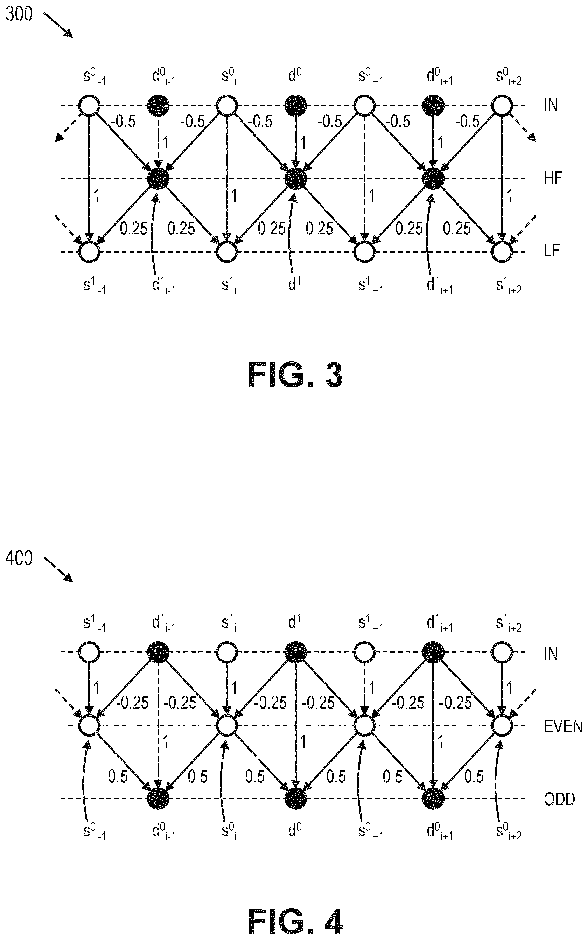

Fig. 3 is a schematic representation of a lifting scheme implementation 300 of a wavelet-type filter operation of the LeGall 5/3 type in a forward way. For the sake of conciseness, the wavelet-type filter operation of the LeGall 5/3 type in a forward way is hereinafter referred to as "FDWT 5/3 filtering". Said FDWT 5/3 filtering comprises a so-called "prediction step" producing high-frequency (HF) outputs and a so-called "update step" producing low-frequency (LF) outputs. Said steps are computed according to the following equations:

$$d^1_i = d^0_i - 0.5^*(s^0_i + s^0_{i+1}) \qquad \text{(HF)}$$

$$s^1_i = s^0_i + 0.25^*(d^1_{i-1} + d^1_i) \qquad \text{(LF)}$$

The FDWT 5/3 filtering operation is applied to a series of even and odd input samples, which are represented as an upper row of circles in Fig. 3, said row being denoted as "IN". Black circles in the IN row of Fig. 3 represent odd input samples, for which a high-frequency output is computed according to the HF equation above and as represented in a middle row of circles in Fig. 3, said row being denoted as "HF". White circles in the IN row of Fig. 3 represent even input samples, for which a low-frequency output is computed according to the LF equation above and as represented in a lower row of circles in Fig. 3, said row being denoted as "LF". Numbers next to arrows in Fig. 3 represent weighting factors according to the HF and LF equations above. Dashed arrows in Fig. 3 indicate that the series of input and output samples may comprise additional samples not represented in Fig. 3. Horizontal dashed lines highlight the respective upper, middle, and lower rows of Fig. 3.

Fig. 4 is a schematic representation of a lifting scheme implementation 400 of a wavelet-type filter operation of the LeGall 5/3 type in an inverse way. For the sake of conciseness, the wavelet-type filter operation of the LeGall 5/3 type in an inverse way is hereinafter referred to as "IDWT 5/3 filtering". Said IDWT 5/3 filtering reverses the HF and LF equations of the FDWT 5/3 filtering according to the following equations:

$$s^0_i = s^1_i - 0.25^*(d^1_{i-1} + d^1_i) \qquad \text{(EVEN)}$$

$$d^0_i = d^1_i + 0.5^*(s^0_i + s^0_{i+1}) \qquad \text{(ODD)}$$

The IDWT 5/3 filtering is applied on high-frequency and low-frequency output samples produced by a FDWT 5/3 filtering, which are represented as an upper row of circles in Fig. 4, said row being denoted as "IN". White circles in the IN row of Fig. 4 represent low-frequency samples, for which an even output is computed according to the EVEN equation above and as represented in a middle row of circles in Fig. 4, said row being denoted as "EVEN". Black circles in the IN row of Fig. 4 represent high-frequency samples, for which an odd output is computed according to the ODD equation above and as represented in a lower row of circles in Fig. 4, said row being denoted as "ODD". Numbers next to arrows in Fig. 4 represent weighting factors according to the EVEN and ODD equations above. Dashed arrows in Fig. 4 indicate that the series of input and output samples may comprise additional samples not represented in Fig. 4. Horizontal dashed lines highlight the respective upper, middle, and lower rows of Fig. 4.

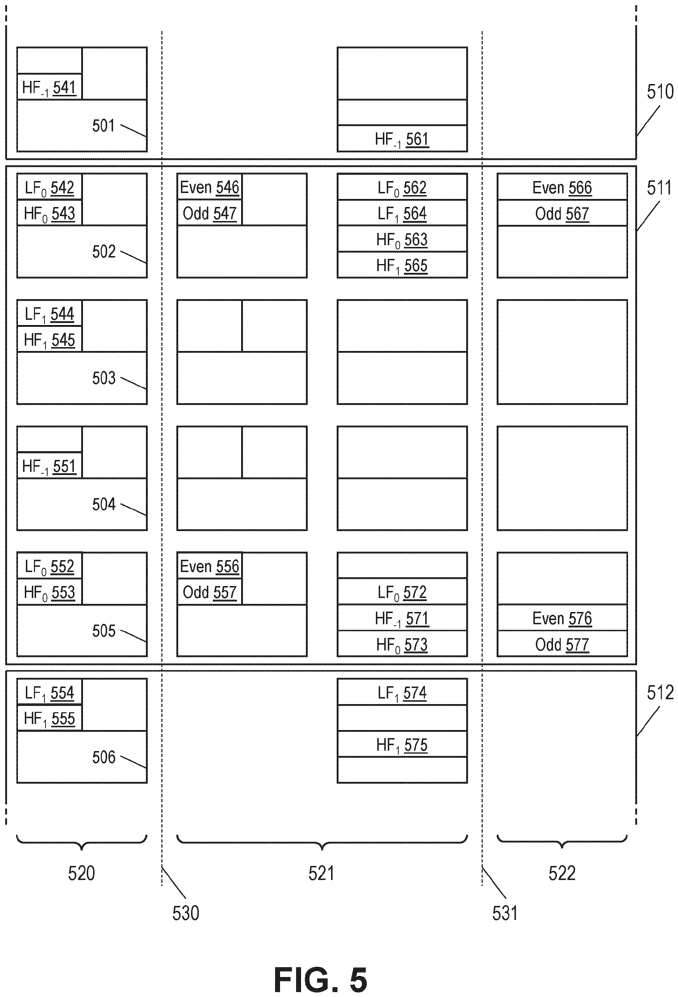

Fig. 5 illustrates a decoding of an encoded image according to the prior art, i.e. in several stages. Fig. 5 illustrates said decoding in a case where slices contain 4 precincts of 4 lines each, so that each slice contains 16 lines, and where a cascade of inverse wavelet-type filter operations is applied, said cascade comprising two inverse wavelet-type filter operations of the LeGall 5/3 type in the vertical direction. The decoding performed in said case is compatible with a decoding performed according to the JPEG XS standard.

Each large rectangle in Fig. 5 such as rectangles 501-506 represents a precinct. Precincts are represented in rows indicating their progressive decoding from left to right in Fig. 5, each row corresponding to a precinct represented at different stages of its decoding, the precincts represented furthest to the right in Fig. 5 being completely decoded, or reconstructed, precincts. Said precincts are comprised in slices 510, 511, and 512. The decoding represented in Fig. 5 reconstructs spatial image samples comprised in slice 511 in several stages 520, 521, and 522. Vertical dashed lines 530 and 531 represent synchronization points between said stages. Fig. 5 particularly illustrates the decoding, or reconstruction, of the first two lines 566, 567 and the last two lines 576, 577 of the slice 511.

Stage 520 may reverse previous wavelet-type filter operations, such as wavelet-type filter operations applied in the horizontal direction (not represented in Fig. 5). Said stage 520 may also perform other operations.

Stage 521 reverses a first wavelet-type filter operation of the LeGall 5/3 type in the vertical direction according to the lifting scheme 400 of Fig. 4. First, half a line of even samples 546 is reconstructed based on samples comprised in half-lines 541-543. Then, half a line of odd samples 547 is reconstructed based on samples comprised in half-lines 541-545. Indeed, as shown in Fig. 4, an even sample is reconstructed from 3 samples; for example, even sample $s^0_i$ in Fig. 4 is reconstructed from samples $d^1_{i-1}$, $s^1_i$, and $d^1_i$. In addition, as also shown in Fig. 4, an odd sample is reconstructed from 5 samples; for example, odd sample $d^0_i$ is reconstructed from samples $d^1_{i-1}$, $s^1_i$, $d^1_i$, $s^1_{i+1}$, and $d^1_{i+1}$.

Samples $s^1$ in Fig. 4 correspond to low-frequency samples, denoted as "LF" in Fig. 5, and samples $d^1$ in Fig. 4 correspond to high-frequency samples, denoted as "HF" in Fig. 5. In the same way, samples $s°$ in Fig. 4 correspond to even samples, denoted as "Even" in Fig. 5, and samples $d°$ in Fig. 4 correspond to odd samples, denoted as "Odd" in Fig. 5.

In the same way as described hereinabove regarding half-lines 546 and 547, half a line of even samples 556 is reconstructed based on samples comprised in half-lines 551-553, and half a line of odd samples 557 is reconstructed based on samples comprised in half-lines 551-555.

It can therefore be seen that stage 521 works based on samples produced by stage 520 and comprised in precincts from slice 511 but also from slices 510 and 512 adjacent to slice 511. Thus, the decoding of half-line 546 requires samples from slice 510, and the decoding of half-line 557 requires samples from slice 512. Assuming that the respective slices are decoded in respective processing channels, i.e. each slice is decoded in a dedicated processing channel, a synchronization point 530 is therefore required between stages 520 and 521 in order to ensure that samples included in said adjacent slices 510 and 512 are available when decoding samples from slice 511.

Finally, stage 521 reverses wavelet-type filter operations applied in the horizontal direction (not represented in Fig. 5), such that half-line 546 corresponds to line 562, and half-line 547 corresponds to line 564. Similarly, half-line 557 corresponds to line 572.

Stage 522 works in the same way as stage 521 and reverses a second wavelet-type filter operation of the LeGall 5/3 type in the vertical direction according to the lifting scheme 400 of Fig. 4. First, a line of even samples 566 is reconstructed based on samples comprised in lines 561-563. Then, a line of odd samples 567 is reconstructed based on samples comprised in lines 561-565. Similarly, a line of even samples 576 is reconstructed based on samples comprised in lines 571-573, and a line of odd samples 577 is reconstructed based on samples comprised in lines 571 - 575.

In the same way as a synchronization point 530 is required between stages 520 and 521 because samples from adjacent slices 510 and 512 are needed to reconstruct some samples of slice 511, a synchronization point 531 is required between stages 521 and 522 because samples from adjacent slices 510 and 512 are needed to reconstruct some samples of slice 511, namely samples from line 561 to reconstruct line 566 and samples from lines 574 and 575 to reconstruct line 577.

As expressed hereinabove, these synchronization points 530 and 531 may have a negative impact on sample decoding performance, due to the waiting times they may cause, during which processing channels are idle and therefore do not compute, as well as the cache misses they may cause, said cache misses stemming from the fact that not all the data needed to reconstruct the samples of a slice are processed in the same processing channel, so that these data may have to be retrieved from the memory of one or more other processing channels in order to be processed in a current processing channel.

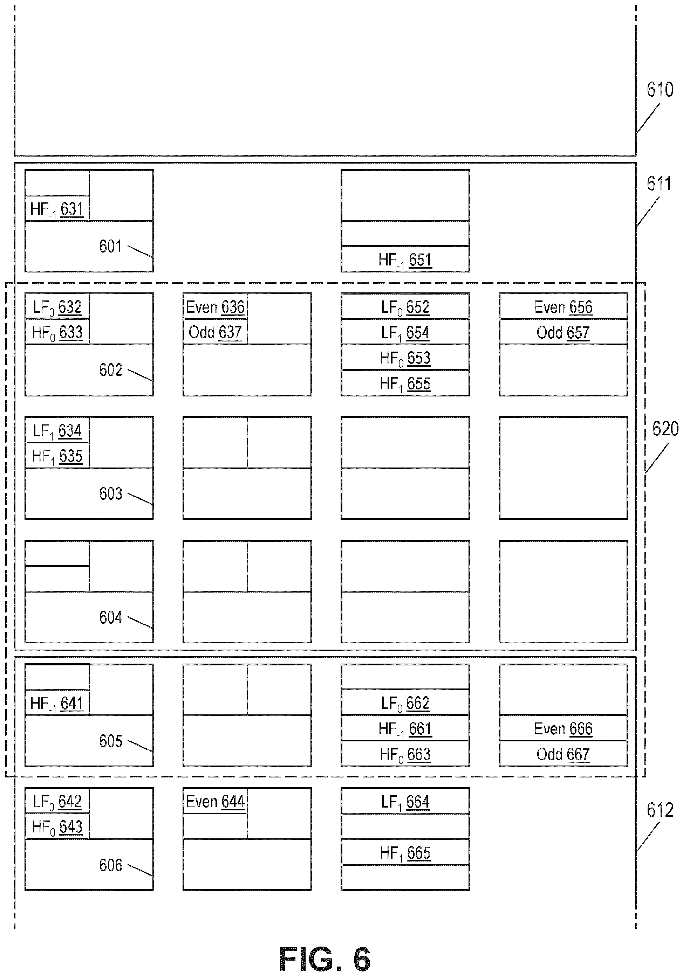

Fig. 6 illustrates a decoding of an encoded image according to the invention, i.e. in a single stage.

Fig. 6 uses the same representations as Fig. 5. So, each large rectangle in Fig. 6 such as large rectangles 601-606 represents a precinct comprising 4 lines. Precincts are represented in rows indicating their progressive decoding from left to right in Fig. 6, each row corresponding to a precinct represented at different stages of its decoding, the precincts represented furthest to the right in Fig. 6 being completely decoded, or reconstructed, precincts. Said precincts are comprised in slices 610, 611, and 612, each slice comprising 4 precincts, i.e. 16 lines.

Fig. 6 illustrates the decoding of a strip 620 of spatial image samples according to the invention, i.e. in a single stage. The strip 620 is represented by a dashed-line frame in Fig. 6. The strip 620 is offset by one precinct, i.e. 4 lines, from the slice 611 to which it corresponds. Fig. 6 illustrates said decoding in a case where slices contain 4 precincts of 4 lines each, so that each slice contains 16 lines, and where a cascade of inverse wavelet-type filter operations is applied, said cascade comprising two inverse wavelet-type filter operations of the LeGall 5/3 type in the vertical direction. The decoding performed in said case is compatible with a decoding performed according to the JPEG XS standard.

The decoding illustrated in Fig. 6 being performed in a single stage, it may therefore be performed by a single processing channel, unlike the case illustrated in Fig. 5, where the decoding is performed according to the prior art, i.e. in several stages 520-522 and with dependencies between several processing channels. In the same way as in Fig. 5, Fig. 6 particularly illustrates the decoding, or reconstruction of the first two lines 656, 657 and the last two lines 666, 667 of the strip 620.

The decoding illustrated in Fig. 6 is performed from an extended group of wavelet coefficients comprised in precincts 601-606. An advantage of the offset of strip 620 relative to the slice 611 to which it corresponds is that said offset allows the decoding to be performed based on samples from two slices only, i.e. slices 611 and 612, and in particular that said decoding may be performed without decoding samples located at the bottom of slice 610. Indeed, in order to decode samples located at the bottom of slice 610, it might be necessary to decode the entire slice 610, in a case where the entropy coding of said samples is performed based on samples from preceding lines, for instance in the case of an entropy encoding such as the vertical prediction mode for bitplane count coding as specified in the JPEG XS standard.

In the same way as in Fig. 5, a first and a second wavelet-type filter operations of the LeGall 5/3 type in the vertical direction are reversed in Fig. 6 for decoding the strip 620 of spatial image samples.

The first inverse wavelet-type filter operation of the LeGall 5/3 type in the vertical direction is applied according to the lifting scheme 400 of Fig. 4 in the following way. First, half a line of even samples 636 is reconstructed based on samples comprised in half-lines 631-633. Then, half a line of odd samples 637 is reconstructed based on samples comprised in half-lines 631-635. Similarly, half a line of even samples 644 is reconstructed based on samples comprised in half-lines 641-643.

Then, inverse wavelet-type filter operations are applied in the horizontal direction (not represented in Fig. 6), such that half-line 636 corresponds to line 652, and half-line 637 corresponds to line 654. Similarly, half-line 644 corresponds to line 664.

The second inverse wavelet-type filter operation of the LeGall 5/3 type in the vertical direction is applied according to the lifting scheme 400 of Fig. 4 in the following way. First, a line of even samples 656 is reconstructed based on samples comprised in lines 651-653. Then, a line of odd samples 657 is reconstructed based on samples comprised in lines 651-655. Similarly, a line of even samples 666 is reconstructed based on samples comprised in lines 661-663, and a line of odd samples 667 is reconstructed based on samples comprised in lines 661-665.

An advantage of the method for decoding of the invention is to allow the decoding to be performed in a single stage, so as to reduce or even remove the dependencies between processing channels. Indeed, in the single-stage decoding as illustrated in Fig. 6, there is no need for synchronization points between processing channels because all data, i.e. all the wavelet coefficients, required for a processing channel to independently reconstruct a strip of spatial image samples, such as the strip 620, are comprised in the extended group of wavelet coefficients provided to said processing channel. In addition, a loss of performance that could arise if said data or part thereof would have to be retrieved from memories of other processing channels is avoided thanks to the method for decoding of the invention. Therefore, the method according to the invention improves the efficiency of the decoding by reducing or even removing dependencies between respective processing channels decoding in parallel respective strips of spatial image samples.

In summary, the invention relates to a method for decoding an encoded image obtainable by applying at least one wavelet-type filter operation in a vertical direction, wherein the efficiency of the decoding is improved by reducing dependencies between respective processing channels decoding in parallel respective strips of spatial image samples, wherein each processing channel reconstructs a strip of spatial image samples independently from the other processing channels from an extended group of wavelet coefficients, whereby extended groups of wavelet coefficients mutually overlap to an extent that each extended group of wavelet coefficients comprises all the wavelet coefficients required for the processing channel receiving the extended group of wavelet coefficients to independently reconstruct a strip of spatial image samples. The invention also relates to an apparatus and a computer program for performing the method for decoding of the invention.

Although the present invention has been described above with respect to particular embodiments, it will readily be appreciated by a person skilled in the art that the present disclosure is not limited by what has been particularly shown and/or described and that alternatives or modified embodiments could be developed in the light of the overall teaching of this disclosure.

**Claims**

1. Method for decoding an encoded image, wherein the encoded image is obtainable by the steps of:

- applying a wavelet-type transformation to a rectangular array of spatial image samples representing the image, the wavelet-type transformation comprising applying a cascade of wavelet-type filter operations at least one of which is applied in a vertical direction, the wavelet-type transformation producing wavelet coefficients that are spatially related to the spatial image samples in the rectangular array;
- organizing the wavelet coefficients to obtain respective groups of wavelet coefficients that are spatially related to respective slices of the rectangular array of spatial image samples; and
- entropy encoding the respective groups of wavelet coefficients independently from each other;

wherein the method for decoding comprises:

- providing respective processing channels that reconstruct from the wavelet coefficients respective strips of spatial image samples, each of the respective processing channels reconstructing a strip of spatial image samples independently from the other processing channels, the respective strips of spatial image samples corresponding at least in size to the respective slices of the rectangular array of spatial image samples, each of the respective processing channels applying a cascade of inverse wavelet-type filter operations independently from the other processing channels for reconstructing a strip of spatial image samples; and
- supplying respective extended groups of wavelet coefficients to the respective processing channels, whereby the extended groups of wavelet coefficients mutually overlap to an extent that each extended group of wavelet coefficients comprises all the wavelet coefficients required for the processing channel receiving the extended group of wavelet coefficients to independently reconstruct a strip of spatial image samples.

2. Method for decoding an encoded image according to claim 1, wherein at least some of the respective strips of spatial image samples are spatially offset from the respective slices of the rectangular array of spatial image samples.

3. Method for decoding an encoded image according to claim 2, wherein at least some of the extended groups of wavelet coefficients each comprise wavelet coefficients from only two adjacent groups of wavelet coefficients spatially related to two adjacent slices of the rectangular array of spatial image samples, whereby said extended groups of wavelet coefficients each comprise one of the two groups of wavelet coefficients in its entirety and only a portion of the other one of the two groups of wavelet coefficients, the portion being adjacent to the one of the two groups of wavelet coefficients that is entirely comprised in the extended group of wavelet coefficients.

4. Method for decoding an encoded image according to any of claims 1 to 3, wherein the cascade of inverse wavelet-type filter operations comprises at least one inverse wavelet-type filter operation of the LeGall 5/3 type in the vertical direction.

5. Method for decoding an encoded image according to any of claims 1 to 4, wherein the decoding conforms with a JPEG XS standard.

6. Method for decoding an encoded image according to claim 5, wherein:

  - at least some of the respective strips of spatial image samples are spatially offset by one precinct from the respective slices of the rectangular array of spatial image samples; and
  - at least some of the extended groups of wavelet coefficients each comprise:
  - an entire group of wavelet coefficients spatially related to a slice of the rectangular array of spatial image samples; and
  - at least two precincts from an adjacent group of wavelet coefficients spatially related to an adjacent slice of the rectangular array of spatial image samples, the at least two precincts being adjacent to the entire group of wavelet coefficients comprised in the extended group of wavelet coefficients.

7. Method for decoding an encoded image according to claim 6, wherein:

  - the cascade of inverse wavelet-type filter operations comprises one inverse wavelet-type filter operation of the LeGall 5/3 type in the vertical direction; and
  - at least some of the extended groups of wavelet coefficients each comprise:

  - an entire group of wavelet coefficients spatially related to a slice of the rectangular array of spatial image samples; and
  - two precincts from an adjacent group of wavelet coefficients spatially related to an adjacent slice of the rectangular array of spatial image samples, the two precincts being adjacent to the entire group of wavelet coefficients comprised in the extended group of wavelet coefficients.

8. Method for decoding an encoded image according to claim 6, wherein:

  - the cascade of inverse wavelet-type filter operations comprises two inverse wavelet-type filter operations of the LeGall 5/3 type in the vertical direction; and
  - at least some of the extended groups of wavelet coefficients each comprise:

  - an entire group of wavelet coefficients spatially related to a slice of the rectangular array of spatial image samples; and
  - two precincts from an adjacent group of wavelet coefficients spatially related to an adjacent slice of the rectangular array of spatial image samples, the two precincts being adjacent to the entire group of wavelet coefficients comprised in the extended group of wavelet coefficients.

9. Computer program comprising instructions which, when the program is executed by a computer, cause the computer to carry out the method according to any of claims 1 to 8.

10. Decoder comprising a processor and a memory, and configured to perform the method according to any of claims 1 to 8.

100

**FIG. 1**

200

**FIG. 2**

## FIG. 3

## FIG. 4

**FIG. 5**

**FIG. 6**

Europäisches
Patentamt
European
Patent Office
Office européen
des brevets

**EUROPEAN SEARCH REPORT**

Application Number

EP 24 20 0902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHTER THOMAS ET AL: "Parallelization and multi-threaded latency constrained parallel coding of JPEG XS", APPLICATIONS OF DIGITAL IMAGE PROCESSING XLII, 6 September 2019 (2019-09-06), pages 103-111, XP055947924, DOI: 10.1117/12.2526917 ISBN: 978-1-5106-2968-4 | 1,4,5,9, 10 | INV. H04N19/436 H04N19/63 H04N19/645 |
| A | * the whole document * | 2,3,6-8 | |
| A | DESCAMPE ANTONIN ET AL: "JPEG XS-A New Standard for Visually Lossless Low-Latency Lightweight Image Coding", PROCEEDINGS OF THE IEEE, IEEE. NEW YORK, US, vol. 109, no. 9, 28 May 2021 (2021-05-28), pages 1559-1577, XP011873407, ISSN: 0018-9219, DOI: 10.1109/JPROC.2021.3080916 [retrieved on 2021-08-18] * the whole document * | 1-10 | |
| A | WLADIMIR J VAN DER LAAN ET AL: "Accelerating Wavelet Lifting on Graphics Hardware Using CUDA", IEEE TRANSACTIONS ON PARALLEL AND DISTRIBUTED SYSTEMS, IEEE, USA, vol. 22, no. 1, 1 January 2011 (2011-01-01), pages 132-146, XP011336986, ISSN: 1045-9219, DOI: 10.1109/TPDS.2010.143 * the whole document * | 1-10 | |

TECHNICAL FIELDS
SEARCHED (IPC)

H04N

The present search report has been drawn up for all claims

| Place of search | Date of completion of the search | Examiner |
|---|---|---|
| Munich | 19 February 2025 | Giuliani, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)